# EUROPÄISCHE PATENTSCHRIFT

(11) **EP 2 698 272 B1**
(45) Veröffentlichungstag und Bekanntmachung des Hinweises auf die Patenterteilung: **24.07.2019**
(21) Anmeldenummer: 13178134.6
(22) Anmeldetag: 26.07.2013
(51) Int. Cl.: B60M 1/30

(54) **Stromschienenauflauf**
Conductor rail points
Plan incliné de rails conducteurs

(30) Priorität: 17.08.2012 DE 202012103104 U
(43) Veröffentlichungstag der Anmeldung: 19.02.2014
(73) Patentinhaber: REHAU AG + Co, 95111 Rehau (DE)
(72) Erfinder: Meschinsky, Manuel, 78052 Villingen (DE); Meinel, Udo, 95111 Rehau (DE)

(56) Entgegenhaltungen:
- DE-A1- 19 840 720
- DE-A1- 19 920 088
- DE-C1- 19 929 374
- DE-U1- 29 910 855
- DE-U1-202010 014 090

## Beschreibung

Die Erfindung betrifft einen Stromschienenauflauf für Stromabnehmer elektrisch betriebener Bahnen, insbesondere S-Bahnen, U-Bahnen und dergleichen, umfassend wenigstens ein Basisprofil sowie wenigstens ein Gleitflächenprofil, wobei das Basisprofil einen Profilfuß, einen Profilkopf sowie einen diese verbindenden Profilsteg aufweist, wobei das Gleitflächenprofil am Basisprofil angeordnet ist.

Der Stromschienenauflauf ist im Stand der Technik bekannt und hat sich seit vielen Jahren bewährt. Dieser Stromschienenauflauf wird mit einer Stromschiene verbunden, die im Allgemeinen aus einem Aluminiumprofil mit einer Edelstahlgleitfläche besteht.
Der Stromschienenauflauf als Komponente in Verbindung mit der Stromschiene dient dazu, dass die Stromabnehmer von elektrisch betriebenen Bahnen die Edelstahlgleitfläche als Lauffläche zur Stromabnahme benutzen. Die Gleitfläche eines Stromschienenauflaufes ist dabei im Einlaufbereich unter einem geringen Winkel gegen die Horizontale geneigt und wird in einem horizontalen Übergangsbereich weitergeführt.
Der Stromschienenauflauf wird regelmäßig als Anfang bzw. Ende einer parallel zum Bahngleis geführten und an Stromschienenträgern gehaltenen Stromschienen eingesetzt.

Ein gattungsgemäßer Stromschienenauflauf ist in der DE 299 10 855 U1 beschrieben. Dieser Stromschienenauflauf für die seitlich angeordneten Stromabnehmer von Elektrobahnen, insbesondere S-Bahnen, mit einem Profilträger aus Leichtmetall und einer Gleitfläche aus Edelstahl, die im Einlaufbereich unter einem geringen Winkel gegen die Horizontale geneigt ist und in einen horizontalen Übergangsbereich übergeht, soll Nachteile aus dem Stand der Technik vermeiden, in dem die Gleitfläche vom Flansch eines T-Profils aus Edelstahl gebildet ist, dessen Steg im Übergangsbereich in einem Schlitz des Profilträgers aus Leichtmetall gehalten ist, wobei das T-Profil aus Edelstahl gefertigt ist.
Um die Passfähigkeit zum Regelprofil zur Aluminiumverbundstromschiene und die Aufnahme in einem Stromschienenträger zu gewährleisten, sollen im hinteren und vorderen Teil des Stromschienenauflaufs geschlitzte Profilstücke aus Aluminium auf das T-Profil aus Edelstahl aufgeschweißt und mit diesem verschraubt bzw. verklebt werden.

Nachteilig bei diesem Stromschienenauflauf ist dessen komplizierte und damit teure Herstellung.
Ein weiterer Nachteil dieses Stromschienenauflaufes besteht darin, dass durch die gewählte Konstruktion das gesamte Verbundprofil, insbesondere durch die Schlitzung, eine geringere mechanische Festigkeit bzw. Stabilität aufweist.

Ebenfalls nachteilig bei dem Stromschienenauflauf ist dessen Lebensdauer, da insbesondere bei bestimmungsgemäßem Einsatz die Edelstahlgleitfläche schnell verschlissen ist und entweder gewechselt oder der komplette Stromschienenauflauf ersetzt werden muss.

Ein weiterer gattungsgemäßer Stromschienenauflauf für Stromabnehmer elektrisch betriebener Bahnen ist aus der DE 202010014090 U1 bekannt.
Dieser Stromschienenauflauf für die seitlich angeordneten Stromabnehmer von Elektrobahnen weist einen Profilträger und eine Gleitfläche aus Edelstahl (1.4301) auf, die im Einlaufbereich unter einem geringen Winkel gegen die Horizontale geneigt ist und in einen horizontalen Übergangsbereich übergeht.
Dabei ist die Gleitfläche vom Flansch eines T-Profils aus Edelstahl gebildet und auch der Steg im Übergangsbereich ist vollständig aus Edelstahl.
Der Stromschienenauflauf besteht im Übergangsbereich zum Regelprofil aus drei Edelstahlprofilen, die miteinander verschweißt sind zum Anschluss an das Regelprofil und zur Befestigung am Stromschienenträger. Weiterhin ist im mittleren Bereich des Stromschienenauflaufes ein Edelstahlprofil eingeschweißt, das zur Befestigung am Stromschienenträger dient.

Nachteilig bei diesem Stromschienenauflauf ist dessen komplexer bzw. komplizierter Aufbau, sowie dessen daraus resultierende teure Herstellung und Montage.

Weiterhin nachteilig bei diesem Stromschienenträger ist es, dass bei der Anwendung auch hier die Edelstahlgleitfläche durch die Stromabnehmer der elektrisch betriebenen Bahnen relativ schnell verschlissen ist und das dann der komplette Stromschienenauflauf durch einen teuer hergestellten und aufwendig montierten neuen Stromschienenauflauf ersetzt werden muss.

Die DE 19920088 A1 beschreibt einen Stromschienenendauflauf im Endbereich einer Stromschiene zur vertikal nach oben verlaufenden Führung der Stromabnehmerschleifschuhe eines Schienenfahrzeuges, wobei ein sich vom Ende der Stromschiene bis zu einem Langloch erstreckender, die Schleifflächenunterkante nicht verletzender, keilförmiger Einschnitt parallel zur Längsachse der Stromschiene vorgesehen ist, welcher sich zum Langloch hin verjüngt, wobei die eng aneinander gepressten Flächen des keilförmigen Einschnittes fest miteinander verbunden sind und sich zwischen Langloch und Schleifflächenunterkante eine Biegefeder mit relativ großem Biegeradius R ausbildet. Die eng aneinander gepressten Flächen des keilförmigen Einschnittes sind miteinander dauerhaft verbunden.

Die DE 19929374 C1 zeigt einen Stromschienenauflauf für die seitlich angeordneten Stromabnehmer von Elektrobahnen, insbesondere S-Bahnen, mit einer Gleitfläche aus Edelstahl, die vom Flansch eines T-Profils aus Edelstahl gebildet und im Einlaufbereich unter einem geringen Winkel gegen die Horizontale geneigt ist und in einen horizontalen Übergangsbereich übergeht und mit einen im Übergangsbereich angeordneten Profilträger aus Leichtmetall zur Aufnahme des Steges des T-Profils in einem Schlitz des Profilträgers, wobei der zwischen Einlaufbereich und Übergangsbereich gelegene mittlere freie Bereich des T-Profils mit einem Radius R größer 10 m ausgerundet ist. Am freien Ende des T-Profils aus Edelstahl ist hier ein Klotz aus schlagzähem Werkstoff, beispielsweise Hartgewebe oder Hartholz, als Kantenschutz angeschraubt.

Die DE 19840720 A1 offenbart ein Verbundprofil mit einem Basisprofil aus einem elektrisch gut leitenden Werkstoff und wenigstens einer mit dem Basisprofil verbundenen Oberflächenbeschichtung aus einem höher abriebfesten Werkstoff, insbesondere einem Verschleißband aus Metall, wobei das Verschleißband an zumindest einer seiner Längskanten Ausnehmungen, Einkerbungen oder Einprägungen aufweist, welche mittels eines Verbindungswerkstoffes oder Verbindungsprofils zumindest teilweise verfüllt und dadurch mit dem Basisprofil kraft- und / oder formschlüssig verbunden sind. Außerdem wird noch ein Verfahren zur Herstellung eines derartigen Verbundprofils offenbart.

Hier setzt die Erfindung ein, die sich die Aufgabe gestellt hat, einen Stromschienenauflauf aufzuzeigen, der die Nachteile des bekannten Standes der Technik überwindet, der kostengünstig und wirtschaftlich herstellbar ist, der schnell und sicher in bestehende Stromschienennetze montierbar bzw. demontierbar ist, wobei keine zusätzlichen Nachbearbeitungsschritte insbesondere der Abdeckung des Stromschienenauflaufes anfallen.

Erfindungsgemäß wird diese Aufgabe gelöst durch die Merkmale des Anspruches 1. Weitere vorteilhafte Ausgestaltungen sind in den Unteransprüchen beschrieben.

Es hat sich überraschend herausgestellt, dass ein Stromschienenauflauf für Stromabnehmer elektrisch betriebener Bahnen, insbesondere S-Bahnen, U-Bahnen und dergleichen umfassend wenigstens ein Basisprofil sowie wenigstens ein Gleitflächenprofil, wobei das Basisprofil einen Profilfuß, einen Profilkopf sowie einen diese verbindenden Profilsteg aufweist, wobei das Gleitflächenprofil am Basisprofil angeordnet ist, sich dadurch auszeichnet, dass an wenigstens an einem freien Ende des Stromschienenauflaufs der Profilkopf mit dem Profilfuß des Basisprofils verbunden ist und das Gleitflächenprofil das Basisprofil überdeckend überragt, wobei der Profilsteg in Längsrichtung des Basisprofils einen Radius von größer 10 m aufweist, wobei die Dicke des Gleitflächenprofils etwa der Dicke des Profilstegs des Basisprofils entspricht. Durch diese vorteilhafte Ausgestaltung des erfindungsgemäßen Stromschienenauflaufs für Stromabnehmer elektrisch betriebener Bahnen ist eine kostengünstige und wirtschaftliche Herstellung möglich, wobei der erfindungsgemäße Stromschienenauflauf für alle bekannten Stromschienensysteme verwendbar bzw. anpassbar ist. Die Dicke des Gleitflächenprofils kann dabei etwa 8 bis 50 mm, bevorzugt etwa 10 bis 30 mm betragen. Ein weiterer Vorteil des erfindungsgemäßen Stromschienenauflaufes besteht darin, dass dieser im Vergleich zum Stand der Technik eine etwa 2- bis 4-fach längere Lebensdauer aufweist, da das Gleitflächenprofil bei bestimmungsgemäßer Verwendung des Stromschienenauflaufs für Stromabnehmer elektrisch betriebener Bahnen verschleißfester ist.

Es hat sich weiterhin als vorteilhaft herausgestellt, dass der Profilkopf stoffschlüssig mit dem Profilfuß des Basisprofils verbunden ist. Der Vorteil dieser Ausführung des erfindungsgemäßen Stromschienenauflaufes besteht darin, dass insbesondere in dem Bereich wo das Gleitflächenprofil das Basisprofil überdeckend überragt und der größte Verschleiß eines Stromschienenauflaufes entsteht, dies beim erfindungsgemäßen Stromschienenauflauf erheblich reduziert ist.

Weiterhin vorteilhaft beim erfindungsgemäßen Stromschienenauflauf wird gesehen, dass der Profilkopf formschlüssig mit dem Profilfuß des Basisprofils verbunden ist. Hierdurch wird eine besonders kostengünstige Herstellung des erfindungsgemäßen Stromschienenauflaufs möglich.

Ebenfalls vorteilhaft bei dem erfindungsgemäßen Stromschienenauflauf ist, dass das Gleitflächenprofil zumindest abschnittsweise in wenigstens einer Ausnehmung des Profilkopfes des Basisprofils angeordnet ist. In dieser Ausgestaltung des erfindungsgemäßen Stromschienenauflaufes wird eine ausreichende mechanische Festigkeit bzw. Stabilität gewährleistet bei gleichzeitig optimaler elektrischer Leitfähigkeit des gesamten Verbundprofiles. Es liegt auch im Rahmen der Erfindung, dass das Gleitflächenprofil kraftschlüssig und/oder formschlüssig und/oder stoffschlüssig in der Ausnehmung des Profilkopfes des Basisprofils angeordnet ist.

Es liegt weiterhin im Rahmen der Erfindung, dass das Gleitflächenprofil vollflächig in der Ausnehmung des Profilkopfes des Basisprofils angeordnet ist.

Es hat sich weiterhin als vorteilhaft herausgestellt, dass das Gleitflächenprofil die Ausnehmung des Profilkopfes des Basisprofils überragt. Dabei ist die Tiefe der Ausnehmung um etwa 1 bis 20 mm, bevorzugt 2 bis 15 mm geringer als die Dicke des Gleitflächenprofiles. In einem weiteren Ausführungsbeispiel ist das Gleitflächenprofil so ausgeführt ist, dass es etwa mit 5 bis 25 % seiner Dicke die Ausnehmung des Profilkopfes des Basisprofils überragt. Dies führt vorteilhafterweise dazu, dass der erfindungsgemäße Stromschienenauflauf kostengünstig herstellbar und bei bestimmungsgemäßem Gebrauch für Stromabnehmer elektrisch betriebener Bahnen eine hohe Verschleißfestigkeit aufweist.

Der erfindungsgemäße Stromschienenauflauf ist vorteilhafterweise so ausgebildet, dass am Profilkopf des Basisprofils das Gleitflächenprofil aufnehmende Fixierelemente angeordnet sind. Durch diese ist wiederum sichergestellt, dass der erfindungsgemäße Stromschienenauflauf wirtschaftlich und kostengünstig herstellbar ist.

Weiterhin ist der erfindungsgemäße Stromschienenauflauf so ausgebildet, dass das Gleitflächenprofil das Basisprofil am freien Ende des Stromschienenauflaufs um etwa 0,1 bis 1 m, bevorzugt 0,2 bis 0,5 m überragt. Durch diese erfindungsgemässe Ausgestaltung des erfindungsgemäßen Stromschienenauflaufes ist sichergestellt, dass die Stromabnehmer elektrisch betriebener Bahnen bei bestimmungsgemäßem Gebrauch sicher am Gleitflächenprofil geführt sind, ohne das sich Lichtbogen bilden, welche den Verschleiß derartiger Stromschienenaufläufe erhöhen.

Dabei hat es sich auch als vorteilhaft herausgestellt, dass der das Basisprofil überragende Teil des Gleitflächenprofils zum Profilfuß einen Radius von wenigstens 0,05 m, bevorzugt 0,1 m aufweist. Auch durch diese vorteilhafte Ausgestaltung des erfindungsgemäßen Stromschienenauflaufes ist sichergestellt, dass die mechanische Beanspruchung des Stromabnehmers reduziert ist.

Eine ebenfalls vorteilhafte Ausgestaltung des erfindungsgemäßen Stromschienenauflaufens ist so ausgebildet, dass wenigstens ein die Ausnehmung des Profilkopfes begrenzender Steg in Profillängsrichtung des Verbundprofils wenigstens eine Öffnung aufweist. Hierdurch ist sichergestellt, dass insbesondere im Bereich des Radius bzw. in dem Bereich, in dem das Gleitflächenprofil das Basisprofil überdeckend überragt, eine kontinuierliche Fläche des Gleitflächenprofils zur Verfügung steht, so dass bei bestimmungsgemäßer Verwendung des Stromschienenauflaufs für Stromabnehmer elektrisch betriebener Bahnen der Stromabnehmer immer optimal geführt ist.

Weiterhin vorteilhaft bei dem erfindungsgemäßen Stromschienenauflauf ist, dass an wenigstens einer Öffnung des Steges des Profilkopfes wenigstens ein Fixierelement angeordnet ist. Dieses Fixierelement führt vorteilhafter Weise dazu, dass in diesem Bereich das Gleitflächenprofil insbesondere bei hohem Verschleiß der Kontaktfläche sicher fixiert ist und bleibt.

Ein weiterer Vorteil des erfindungsgemäßen Stromschienenauflaufes besteht darin, dass die Breite des Gleitflächenprofils geringfügig größer ist als die Breite der Ausnehmung des Profilkopfes des Basisprofils. In dieser Ausführungsform lässt sich das Gleitflächenprofil somit kostengünstig sowie wirtschaftlich herstellen und mit wenig Aufwand formschlüssig in der Ausnehmung des Profilkopfes des Basisprofils fixieren.

Der erfindungsgemäße Stromschienenauflauf ist weiterhin vorteilhaft so ausgebildet, dass das Gleitflächenprofil eine Breite aufweist, die größer ist, als die Breite eines Gleitflächenprofils einer Stromschiene, an deren freien Ende dieser erfindungsgemäße Stromschienenauflauf angeordnet ist. Die Breite des Gleitflächenprofils kann dabei etwa 60 bis 160 mm, bevorzugt etwa 80 bis 140 mm betragen. Durch diese vorteilhafte Ausgestaltung des erfindungsgemäßen Stromschienenauflaufes können verschieden dimensionierte sowie verschieden angeordnete Stromabnehmer elektrischer Bahnen über das freie Ende des erfindungsgemäßen Stromschienenauflaufes geführt und in Profillängsrichtung zum schmaleren Gleitflächenprofil der konventionellen Stromschiene übergeben werden.

Ebenfalls vorteilhaft bei dem erfindungsgemäßen Stromschienenauflauf ist, dass in der Ausnehmung des Profilkopfes wenigstens eine Nut eingebracht ist. Diese Nut, die vorteilhafterweise in Profillängsrichtung eingebracht ist, dient der Aufnahme des damit in Wirkverbindung zu bringenden Gleitflächenprofils und führt vorteilhafterweise zu einer einfachen und sicheren Fixierung.

Dabei kann die Nut des Profilkopfes des Basisprofils hinterschnittig ausgebildet sein, so dass das Gleitflächenprofil, welches an seiner dem Profilkopf gegenüberliegenden Seite wenigstens einen in Profillängsrichtung ausgebildeten Steg aufweist, kraftschlüssig und / oder formschlüssig in der Nut des Profilkopfes des Basisprofils eingebracht werden.
Somit besteht vorteilhafterweise bei dem erfindungsgemäßen Stromschienenauflauf eine Wirkverbindung zwischen dem Steg des Gleitflächenprofils und der Nut des Profilkopfes des Basisprofils.

Es hat sich beim erfindungsgemäßen Stromschienenauflauf weiterhin als sehr vorteilhaft herausgestellt, dass das Gleitflächenprofil in Profillängsrichtung des Verbundprofils wenigstens zwei aneinander angeordnete Gleitflächenprofilelemente aufweist. Hierdurch ist einerseits eine wirtschaftliche Herstellung der Gleitflächenprofilelemente und damit des Gleitflächenprofils möglich, während andererseits bei bestimmungsgemäßem Einsatz des Stromschienenauflaufs für Stromabnehmer elektrisch betriebener Bahnen beispielsweise die besonders verschleißbehafteten freien Enden, die das Basisprofil abdeckend überragen, auch einzeln ersetzbar sind, ohne den gesamten Stromschienenauflauf zu demontieren bzw. zu ersetzen.

Der erfindungsgemäße Stromschienenauflauf ist vorteilhafterweise so ausgebildet, dass das Basisprofil aus einem elektrisch gut leitenden Werkstoff wie beispielsweise Aluminium hergestellt ist mit einer elektrischen Leitfähigkeit von etwa 30 MS/m, während das Gleitflächenprofil aus einem sehr abriebfesten Werkstoff wie beispielsweise Edelstahl besteht, welcher eine Festigkeit von etwa 400 bis 700 MPa sowie eine Leitfähigkeit von wenigstens 20 MS/m aufweist.

Die Erfindung soll nun an diesen nicht einschränkenden Ausführungsbeispielen näher beschrieben werden.

Es zeigen:
- Fig. 1: perspektivische Darstellung eines erfindungsgemäßen Stromschienenauflaufes;
- Fig. 2: Seitenansicht eines freien Endes des erfindungsgemäßen Stromschienenauflaufes;
- Fig. 3: Vorderansicht eines erfindungsgemäßen Stromschienenauflaufs;
- Fig. 4: perspektivische Darstellung eines weiteren erfindungsgemäßen Stromschienenauflaufes.

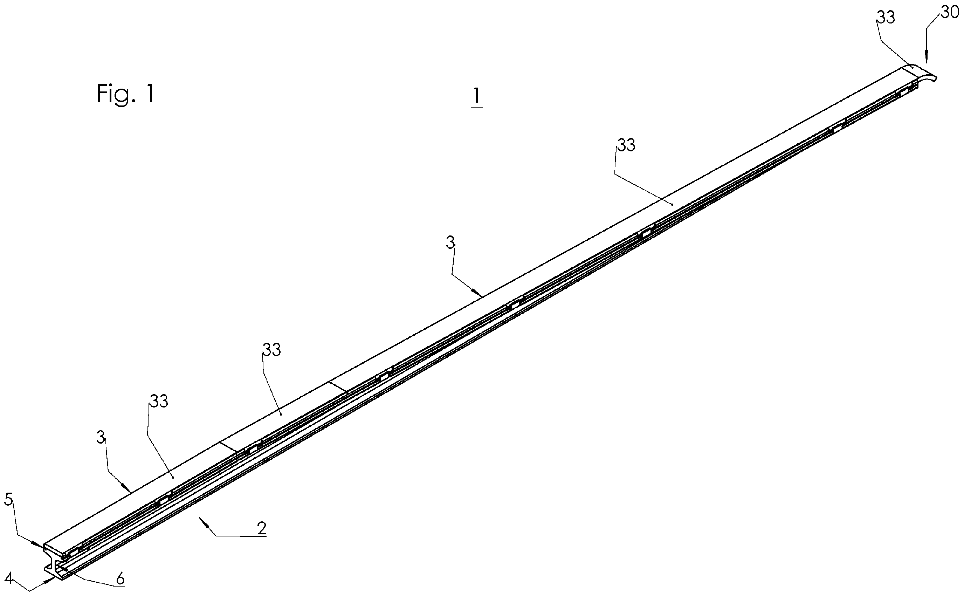

In der Fig. 1 ist eine perspektivische Darstellung des erfindungsgemäßen Stromschienenauflaufs 1 für Stromabnehmer elektrisch betriebener Bahnen dargestellt.

Der Stromschienenauflauf 1 umfasst ein Basisprofil 2 sowie ein Gleitflächenprofil 3.

Das Basisprofil 2 weist einen Profilfuß 4, einen Profilkopf 5 sowie einen diese verbindenden Profilsteg 6 auf.

Das Gleitflächenprofil 3 weist in diesem Ausführungsbeispiel insgesamt vier Gleitflächenprofilelemente 33 auf, die am Profilkopf 5 des Basisprofils 2 angeordnet sind.

Am freien Ende 30 des Stromschienenauflaufes 1 ist der Profilkopf 5 mit dem Profilfuß 4 des Basisprofils 2 verbunden, wobei das Gleitflächenprofil 3 das Basisprofil 2 abdeckend überragt.

Der Profilsteg 6 des Basisprofils 2 weist in diesem Ausführungsbeispiel in Längsrichtung einen Radius von etwa 20 m auf.

Die Dicke des Gleitflächenprofils 3 entspricht in diesem Ausführungsbeispiel in etwa der Dicke des Profilstegs 6 des Basisprofils 2.

Die das Gleitflächenprofil 3 bildenden Gleitflächenprofilelemente 33 sind an ihren schmalen Stirnseiten aneinanderliegend kraftschlüssig am Profilkopf 5 des Basisprofils 2 angeordnet. Dass das Basisprofil 2 überragende Gleitflächenprofilelement 33 des Gleitflächenprofils 3 weist in diesem Ausführungsbeispiel zum Profilfuß einen Radius von etwa 0,1 m auf.

In diesem Ausführungsbeispiel ist der Profilkopf 5 stoffschlüssig mit dem Profilfuß 4 des Basisprofils 2 verbunden durch eine an sich bekannte Verschweißung.

Hierbei wurde in Profillängsrichtung des Stromschienenauflaufes 1 der Profilsteg 6 in einem Radius von 20 m so bearbeitet, dass an dem freien Ende 30 des Stromschienenauflaufs 1 der Profilkopf 5 direkt ohne Profilsteg 6 mit dem Profilfuß 4 des Basisprofils 2 verbunden ist.

An der dem freien Ende 30 des Stromschienenauflaufes 1 gegenüberliegenden freien Ende ist der Profilkopf 5 über den Profilsteg 6 beabstandet mit dem Profilfuß 4 des Basisprofils 2 verbunden.

Durch diese vorteilhafte Ausgestaltung ist das Gleitflächenprofil 3 so angeordnet, dass bei bestimmungsgemäßer Verwendung des erfindungsgemäßen Stromschienenauflaufs 1 für Stromabnehmer elektrisch betriebener Bahnen sichergestellt ist, dass der Stromabnehmer nahezu ohne Lichtbogenbildung mit dem Gleitflächenprofil 3 in elektrische Wirkverbindung treten kann und andererseits der Verschleiß des Gleitflächenprofils 3 durch diese bestimmungsgemäße Verwendung erheblich reduziert ist.

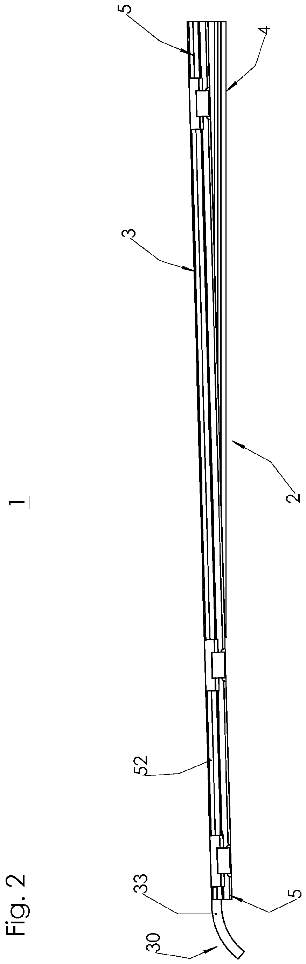

In der Fig. 2 ist eine Seitenansicht des freien Endes 30 des erfindungsgemäßen Stromschienenauflaufs 1 dargestellt.

Am freien Ende 30 des Stromschienenauflaufes 1 ist der Profilkopf 5 in diesem Ausführungsbeispiel formschlüssig mit dem Profilfuß 4 des Basisprofils 2 verbunden.

Das Gleitflächenprofil 3 ist in diesem Ausführungsbeispiel vollflächig stoffschlüssig in einer nicht sichtbaren Ausnehmung des Profilkopfes 5 des Basisprofils 2 angeordnet.

Das Gleitflächenprofil 3 ist so dimensioniert, dass es den die nicht sichtbare Ausnehmung begrenzenden Steg 52 des Profilkopfes 5 des Basisprofils 2 überragt.

Das freie Ende 30 des Gleitflächenprofils 3 überragt in diesem Ausführungsbeispiel das Basisprofil 2 um etwa 0,2 m.

Weiterhin weist der das Basisprofil 2 überragende Teil des Gleitflächenprofils 3 in Form des Gleitflächenprofilelementes 33 zum Profilfuß 4 des Basisprofils 2 einen Radius von etwa 0,2 m auf.

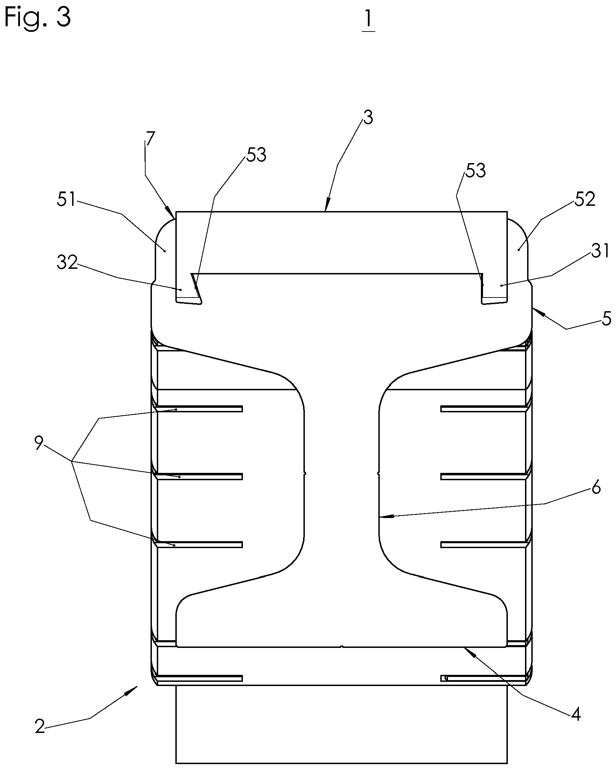

In der Fig. 3 ist eine Vorderansicht des erfindungsgemäßen Stromschienenauflaufs 1 für Stromabnehmer elektrisch betriebener Bahnen umfassend wenigstens ein Basisprofil 2 sowie wenigstens ein Gleitflächenprofil 3 dargestellt.

Das Basisprofil 2 weist einen Profilfuß 4, einen Profilkopf 5 sowie einen diese verbindenden Profilsteg 6 auf.

Das Gleitflächenprofil 3 ist in einer Ausnehmung 7 des Profilkopfes 5 des Basisprofils 2 angeordnet.

An dem diesen Ende des erfindungsgemäßen Stromschienenauflaufs 1 gegenüberliegenden Ende 30 des Basisprofils 2 ist der Profilkopf 5 mit dem Profilfuß 4 verbunden und das Gleitflächenprofil 3 überragt überdeckend das Basisprofil 2.

Die Dicke des Gleitflächenprofils 3 weist in diesem Ausführungsbeispiel eine Dicke auf, die etwa der Dicke des Profilstegs 6 des Basisprofils 2 entspricht.

Es liegt auch im Rahmen der Erfindung, dass das Gleitflächenprofil 3 eine Dicke aufweist, die etwa der Dicke des Profilkopfes 5 des Basisprofils 2 entspricht. Dabei kann die Dicke des Gleitflächenprofils 3 etwa 8 bis 50 mm, bevorzugt etwa 10 bis 30 mm betragen.

Das Gleitflächenprofil 3 ist weiterhin so ausgebildet, dass es die Ausnehmung 7 des Profilkopfes 5 des Basisprofils 2 überragt. Dabei ist die Tiefe der Ausnehmung 7 um etwa 1 bis 20 mm, bevorzugt 2 bis 15 mm geringer als die Dicke des Gleitflächenprofiles 3.

In diesem Ausführungsbeispiel ist das Gleitflächenprofil 3 weiterhin so ausgeführt ist, dass es etwa mit 5 bis 25 % seiner Dicke die Ausnehmung 7 des Profilkopfes 5 des Basisprofils 2 überragt.

Die Breite des Gleitflächenprofils 3 ist in diesem Ausführungsbeispiel so ausgebildet, dass sie in etwa der Breite der Ausnehmung 7 des Profilkopfes 5 des Basisprofils 2 entspricht und etwa 60 bis 160 mm, bevorzugt etwa 80 bis 140 mm beträgt.

Die Ausnehmung 7 des Profilkopfes 5 des Basisprofils 2 wird in Profillängsrichtung von den Stegen 51, 52 begrenzt.

In der Ausnehmung 7 des Profilkopfes 5 sind in diesem Ausführungsbeispiel jeweils zwei voneinander beabstandet, parallel gegenüberliegend in Profillängsrichtung eingebrachte Nuten 53 angeordnet, welche am Steg 51, 52 des Profilkopfes 5 des Basisprofils 2 angeordnet sind.

Dabei kann die Nut 53 des Profilkopfes 5 verschiedene Querschnitte aufweisen.

Im rechten Teil der Fig. 3 weist die Nut 53 des Profilkopfes 5 im Querschnitt eine viereckige Geometrie auf.

Die Nut 53 des Profilkopfes 5 auf der linken Seite des Basisprofils 2 in der Fig. 3 weist hingegen einen prismatischen Querschnitt auf, der hinterschnittig ausgebildet ist.

Das Gleitflächenprofil 3 ist in diesem Ausführungsbeispiel so ausgebildet, dass es an seiner dem Profilkopf 5 des Basisprofils 2 gegenüberliegenden Seite wenigstens einen in Profillängsrichtung ausgebildeten Steg 31, 32 aufweist.

Der Steg 31 des Gleitflächenprofils 3 steht mit der Nut 53 des Profilkopfes 5 kraftschlüssig in Wirkverbindung, während der Steg 32 des Gleitflächenprofils 3 so ausgebildet ist, dass er mit der hinterschnittig ausgebildeten Nut 53 des Profilkopfes 5 formschlüssig in Wirkverbindung steht.

Durch die Wahl des Querschnittes der Nut 53 des Profilkopfes 5 sowie des Steges 31, 32 des Gleitflächenprofils 3 kann ein Stromschienenablauf 1 zur Verfügung gestellt werden, der allen technischen, mechanischen sowie elektrischen Anforderungen für Stromabnehmer elektrisch betriebener Bahnen genügt.

Das Gleitflächenprofil 3 mit seinem viereckigen Steg 31 sowie der damit in Wirkverbindung tretenden Nut 53 des Profilkopfes 5 können auch stoffschlüssig durch eine entsprechende Verschweißung verbunden sein.

Das Basisprofil 2 ist in diesem Ausführungsbeispiel weiterhin so ausgebildet, dass wenigstens ein die Ausnehmung 7 des Profilkopfes 5 begrenzender Steg 51, 52 in Profillängsrichtung wenigstens eine Öffnung 9 aufweist. Diese Öffnungen 9 dienen vorteilhafterweise zur Aufnahme von bspw. Fixierelementen.

Weiterhin ist der erfindungsgemäße Stromschienenauflauf 1 so ausgebildet, dass in wenigstens einer Öffnung 9 des Steges 51, 52 des Profilkopfes 5 wenigstens ein Fixierelement 8 anordenbar ist.

Das Fixierelement 8 dient dazu, dass die das Gleitflächenprofil 3 bildenden Gleitflächenprofilelemente 33 in Profillängsrichtung jeweils kraftschlüssig und / oder formschlüssig und / oder stoffschlüssig fixiert sind.

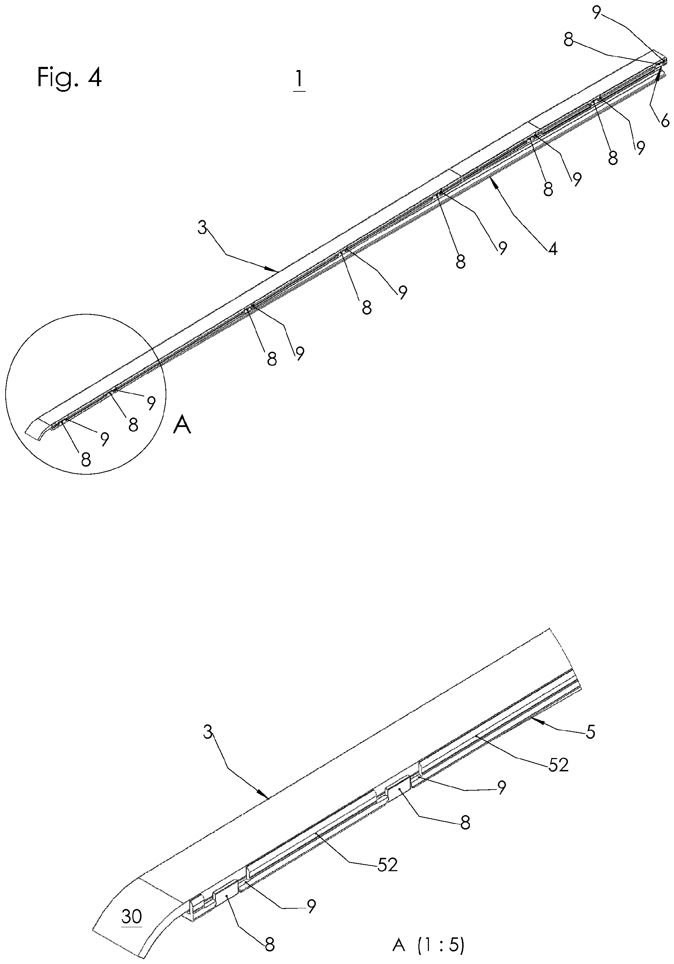

In der Fig. 4 ist eine perspektivische Darstellung eines weiteren erfindungsgemäßen Stromschienenauflaufes 1 für Stromabnehmer elektrisch betriebener Bahnen dargestellt. Dieser umfasst ein Basisprofil 2 sowie ein Gleitflächenprofil 3.

Das Basisprofil 2 weist an seinem einen freien Ende einen Profilfuß 4, einen Profilkopf 5 sowie einen diese verbindenden Profilsteg 6 auf, wie m Detail A vergrößert dargestellt. Das Gleitflächenprofil 3 ist in einer nicht sichtbaren Ausnehmung 7 des Profilkopfes 5 des Basisprofils 2 angeordnet.

Im Detailausschnitt A ist erkennbar, dass das freie Ende 30 des Gleitflächenprofils 3 ein freies Ende des Basisprofils 2 überragt überdeckt, wobei an diesem freien Ende des Basisprofils 2 der Profilkopf 5 mit dem Profilfuß 4 direkt verbunden ist.

Der Profilsteg 6 des Basisprofils 2 weist in diesem Ausführungsbeispiel in Profillängsrichtung einen Radius von etwa 30 m auf, wobei die Dicke des Gleitflächenprofils 3 in etwa der Dicke des Profilfußes 4 des Basisprofils 2 entspricht.

Das Gleitflächenprofil 3 weist in diesem Ausführungsbeispiel eine Breite auf, die geringfügig größer ist als die Breite der nicht sichtbaren Ausnehmung des Profilkopfes 5 des Basisprofils 2 und ist in dieser formschlüssig angeordnet.

Das Basisprofil 2 ist in diesem Ausführungsbeispiel weiterhin so ausgebildet, dass wenigstens ein die Ausnehmung 7 des Profilkopfes 5 begrenzender Steg 51, 52 in Profillängsrichtung wenigstens eine Öffnung 9 aufweist.

Der erfindungsgemäße Stromschienenauflauf 1 ist weiterhin so ausgebildet, dass in wenigstens einer Öffnung 9 des Steges 51, 52 des Profilkopfes 5 wenigstens ein Fixierelement 8 angeordnet ist. Das Fixierelement 8 dient dazu, dass die das Gleitflächenprofil 3 bildenden Gleitflächenprofilelemente 33 in Längsrichtung des Basisprofils 2 jeweils kraftschlüssig und / oder formschlüssig und / oder stoffschlüssig fixiert sind.

An dem freien Ende des Basisprofils 2 an dem der Profilkopf 5 mit dem Profilfuß 4 direkt verbunden ist, weist das Basisprofil 2 Fixierelemente 8 auf, die das Gleitflächenprofil 3 umschließend fixieren.

Das freie Ende 30 des Gleitflächenprofils 3 ist in diesem Ausführungsbeispiel so ausgestaltet, dass es einen Radius zum Profilfuß von etwa 0,1 m aufweist, das Basisprofil in Profillängsrichtung um etwa 0,1 m überragt und senkrecht zur Profilrichtung das Basisprofil 2 um etwa 1 m überragt. Das freie Ende 30 des Gleitflächenprofils 3 ist somit um etwa 0,1 m beabstandet vom Profilfuß 4 des Basisprofils 2 angeordnet.

## Patentansprüche

1. Stromschienenauflauf (1) für Stromabnehmer elektrisch betriebener Bahnen, insbesondere S-Bahnen, U-Bahnen und dergleichen, umfassend wenigstens ein Basisprofil (2) sowie wenigstens ein Gleitflächenprofil (3), wobei das Basisprofil (2) einen Profilfuß (4), einen Profilkopf (5) sowie einen diese verbindenden Profilsteg (6) aufweist, wobei das Gleitflächenprofil (3) am Basisprofil (2) angeordnet ist, wobei der Profilsteg (6) in Längsrichtung des Basisprofils (2) einen Radius von größer 10 m aufweist, **dadurch gekennzeichnet, dass** an dem freien Ende (30) des Stromschienenauflaufs (1) der Profilkopf (5) mit dem Profilfuß (4) des Basisprofils (2) verbunden ist und dass das Gleitflächenprofil (3) das Basisprofil (2) am freien Ende (30) des Stromschienenauflaufes (1) um etwa 0,1 bis 1 m, bevorzugt um etwa 0,2 bis 0,5 m überragt, wobei die Dicke des Gleitflächenprofils (3) etwa der Dicke des Profilstegs (6) des Basisprofils (2) entspricht.

2. Stromschienenauflauf (1) nach Anspruch 1, **dadurch gekennzeichnet, dass** der Profilkopf (5) stoffschlüssig mit dem Profilfuß (4) des Basisprofils (2) verbunden ist.

3. Stromschienenauflauf (1) nach Anspruch 1, **dadurch gekennzeichnet, dass** der Profilkopf (5) formschlüssig mit dem Profilfuß (4) des Basisprofils (2) verbunden ist.

4. Stromschienenauflauf (1) nach einem der vorhergehenden Ansprüche, **dadurch gekennzeichnet, dass** das Gleitflächenprofil (3) zumindest abschnittsweise in wenigstens einer Ausnehmung (7) des Profilkopfes (5) des Basisprofils (2) angeordnet ist.

5. Stromschienenauflauf (1) nach Anspruch 4, **dadurch gekennzeichnet, dass** das Gleitflächenprofil (3) die Ausnehmung (7) des Profilkopfes (5) des Basisprofils (2) überragt.

6. Stromschienenauflauf (1) nach einem der vorhergehenden Ansprüche, **dadurch gekennzeichnet, dass** am Profilkopf (5) des Basisprofils (2) das Gleitflächenprofil (3) aufnehmende Fixierelemente (8) angeordnet sind.

7. Stromschienenauflauf (1) nach einem der vorhergehenden Ansprüche, **dadurch gekennzeichnet, dass** der das Basisprofil (2) überragende Teil des Gleitflächenprofils (3) zum Profilfuß (4) einen Radius von wenigstens 0,05 m, bevorzugt 0,1 m aufweist.

8. Stromschienenauflauf (1) nach einem der vorhergehenden Ansprüche, **dadurch gekennzeichnet, dass** wenigstens ein die Ausnehmung (7) des Profilkopfes (5) begrenzender Steg (51, 52) in Profillängsrichtung wenigstens eine Öffnung (9) aufweist.

9. Stromschienenauflauf (1) nach Anspruch 8, **dadurch gekennzeichnet, dass** an wenigstens einer Öffnung (9) des Steges (51, 52) des Profilkopfes (5) wenigstens ein Fixierelement (8) angeordnet ist.

10. Stromschienenauflauf (1) nach einem der vorhergehenden Ansprüche, **dadurch gekennzeichnet, dass** die Breite des Gleitflächenprofils (3) geringfügig größer ist als die Breite der Ausnehmung (7) des Profilkopfs (5) des Basisprofils (2).

11. Stromschienenauflauf (1) nach einem der vorhergehenden Ansprüche, **dadurch gekennzeichnet, dass** in der Ausnehmung (7) des Profilkopfs (5) des Basisprofils (2) wenigstens eine Nut (53) eingebracht ist.

12. Stromschienenauflauf (1) nach einem der vorhergehenden Ansprüche, **dadurch gekennzeichnet, dass** das Gleitflächenprofil (3) an seiner dem Profilkopf (5) gegenüberliegenden Seite wenigstens einen in Profillängsrichtung ausgebildeten Steg (31) aufweist.

13. Stromschienenauflauf (1) nach Anspruch 12, **dadurch gekennzeichnet, dass** der Steg (31) des Gleitflächenprofils (3) in Wirkverbindung mit der Nut (53) des Profilkopfs (5) steht.

14. Stromschienenauflauf (1) nach einem der vorhergehenden Ansprüche, **dadurch gekennzeichnet, dass** das Gleitflächenprofil (3) in Profillängsrichtung wenigstens zwei aneinander angeordnete Gleitflächenprofilelemente (33) aufweist.

## Claims

1. A conductor rail ramp (1) for current collectors of electrically operated railways, in particular suburban railways, underground railways and the like, comprising at least one base profile (2) and at least one sliding surface profile (3), wherein the base profile (2) has a profile foot (4), a profile head (5) and a tie-bar (6) connecting them, wherein the sliding surface profile (3) is arranged on the base profile (2), wherein the tie-bar (6) has a radius of greater than 10 m in the longitudinal direction of the base profile (2), **characterised in that** at the free end (30) of the conductor rail ramp (1) the profile head (5) is connected to the profile foot (4) of the base profile (2) and **in that** the sliding surface profile (3) projects beyond the base profile (2) by about 0.1 to 1 m, preferably by about 0.2 to 0.5 m, at the free end (30) of the conductor rail ramp (1), wherein the thickness of the sliding surface profile (3) approximately corresponds to the thickness of the tie-bar (6) of the base profile (2).

2. The conductor rail ramp (1) according to claim 1, **characterised in that** the profile head (5) is connected by a substance-to-substance bond to the profile foot (4) of the base profile (2).

3. The conductor rail ramp (1) according to claim 1, **characterised in that** the profile head (5) is positively connected to the profile foot (4) of the base profile (2).

4. The conductor rail ramp (1) according to one of the preceding claims, **characterised in that** the sliding surface profile (3) is arranged in at least one recess (7) of the profile head (5) of the base profile (2) at least in some sections.

5. The conductor rail ramp (1) according to claim 4, **characterised in that** the sliding surface profile (3) projects beyond the recess (7) of the profile head (5) of the base profile (2).

6. The conductor rail ramp (1) according to one of the preceding claims, **characterised in that** on the profile head (5) of the base profile (2), fixing elements (8) accommodating the sliding surface profile (3) are arranged.

7. The conductor rail ramp (1) according to one of the preceding claims, **characterised in that** the part of the sliding surface profile (3) projecting beyond the base profile (2) has a radius of at least 0.05 m, preferably 0.1 m, relative to the profile foot (4).

8. The conductor rail ramp (1) according to one of the preceding claims, **characterised in that** at least one bar (51, 52) defining the recess (7) of the profile head (5) has at least one opening (9) in the longitudinal direction of the profile.

9. The conductor rail ramp (1) according to claim 8, **characterised in that** at least one fixing element (8) is arranged at at least one opening (9) of the bar (51, 52) of the profile head (5).

10. The conductor rail ramp (1) according to one of the preceding claims, **characterised in that** the width of the sliding surface profile (3) is slightly greater than the width of the recess (7) of the profile head (5) of the base profile (2).

11. The conductor rail ramp (1) according to one of the preceding claims, **characterised in that** at least one groove (53) is introduced into the recess (7) of the profile head (5) of the base profile (2).

12. The conductor rail ramp (1) according to one of the preceding claims, **characterised in that** the sliding surface profile (3) has at least one bar (31) formed in the longitudinal direction of the profile on the side thereof lying opposite the profile head (5).

13. The conductor rail ramp (1) according to claim 12, **characterised in that** the bar (31) of the sliding surface profile (3) is operatively connected to the groove (53) of the profile head (5).

14. The conductor rail ramp (1) according to one of the preceding claims, **characterised in that** the sliding surface profile (3) has at least two sliding surface profile elements (33) arranged adjacent to each other in the longitudinal direction of the profile.

## Revendications

1. Plan incliné de rails conducteurs (1) pour des collecteurs de courant de trains à fonctionnement électrique, en particulier de trains de banlieue, de métros ou similaires, comprenant au moins un profil de base (2) ainsi qu'au moins un profil de surface de glissement (3), dans lequel le profil de base (2) présente une embase de profil (4), une tête de profil (5) ainsi qu'une entretoise de profil (6) reliant celles-ci, dans lequel le profil de surface de glissement (3) est disposé au niveau du profil de base (2), dans lequel l'entretoise de profil (6) présente dans le sens longitudinal du profil de base (2) un rayon supérieur à 10 m, **caractérisé en ce que** la tête de profil (5) est reliée à l'embase de profil (4) du profil de base (2) au niveau de l'extrémité libre (30) du plan incliné de rails conducteurs (1), et que le profil de surface de glissement (3) dépasse le profil de base (2) au niveau de l'extrémité libre (30) du plan incliné de rails conducteurs (1) d'environ 0,1 à 1 m, de préférence d'environ 0,2 à 0,5 m, dans lequel l'épaisseur du profil de surface de glissement (3) correspond à peu près à l'épaisseur de l'entretoise de profil (6) du profil de base (2).

2. Plan incliné de rails conducteurs (1) selon la revendication 1, **caractérisé en ce que** la tête de profil (5) est reliée par liaison de matière à l'embase de profil (4) du profil de base (2).

3. Plan incliné de rails conducteurs (1) selon la revendication 1, **caractérisé en ce que** la tête de profil (5) est reliée par complémentarité de forme à l'embase de profil (4) du profil de base (2).

4. Plan incliné de rails conducteurs (1) selon l'une quelconque des revendications précédentes, **caractérisé en ce que** le profil de surface de glissement (3) est disposé au moins par endroits dans au moins un évidement (7) de la tête de profil (5) du profil de base (2).

5. Plan incliné de rails conducteurs (1) selon la revendication 4, **caractérisé en ce que** le profil de surface de glissement (3) dépasse l'évidement (7) de la tête de profil (5) du profil de base (2).

6. Plan incliné de rails conducteurs (1) selon l'une quelconque des revendications précédentes, **caractérisé en ce que** des éléments de fixation (8) recevant le profil de surface de glissement (3) sont disposés au niveau de la tête de profil (5) du profil de base (2).

7. Plan incliné de rails conducteurs (1) selon l'une quelconque des revendications précédentes, **caractérisé en ce que** la partie, dépassant du profil de base (2), du profil de surface de glissement (3) présente par rapport à l'embase de profil (4) un rayon d'au moins 0,05 m, de préférence de 0,1 m.

8. Plan incliné de rails conducteurs (1) selon l'une quelconque des revendications précédentes, **caractérisé en ce qu'**au moins une entretoise (51, 52) délimitant l'évidement (7) de la tête de profil (5) présente dans le sens longitudinal de profil au moins une ouverture (9).

9. Plan incliné de rails conducteurs (1) selon la revendication 8, **caractérisé en ce qu'**au moins un élément de fixation (8) est disposé au niveau d'au moins une ouverture (9) de l'entretoise (51, 52) de la tête de profil (5).

10. Plan incliné de rails conducteurs (1) selon l'une quelconque des revendications précédentes, **caractérisé en ce que** la largeur du profil de surface de glissement (3) est légèrement plus grande que la largeur de l'évidement (7) de la tête de profil (5) du profil de base (2).

11. Plan incliné de rails conducteurs (1) selon l'une quelconque des revendications précédentes, **caractérisé en ce qu'**au moins une rainure (53) est pratiquée dans l'évidement (7) de la tête de profil (5) du profil de base (2).

12. Plan incliné de rails conducteurs (1) selon l'une quelconque des revendications précédentes, **caractérisé en ce que** le profil de surface de glissement (3) présente au niveau de son côté faisant face à la tête de profil (5) au moins une entretoise (31) réalisée dans le sens longitudinal de profil.

13. Plan incliné de rails conducteurs (1) selon la revendication 12,
**caractérisé en ce que** l'entretoise (31) du profil de surface de glissement (3) est en liaison fonctionnelle avec la rainure (53) de la tête de profil (5).

14. Plan incliné de rails conducteurs (1) selon l'une quelconque des revendications précédentes, **caractérisé en ce que** le profil de surface de glissement (3) présente dans le sens longitudinal de profil au moins deux éléments de profil de surface de glissement (33) disposés l'un à l'autre.
